# EUROPEAN PATENT SPECIFICATION

(11) **EP 3 902 345 B1**
(45) Date of publication and mention of the grant of the patent: **30.10.2024**
(21) Application number: 18944057.1
(22) Date of filing: 20.12.2018
(51) Int. Cl.: H04W 72/0446, H04W 16/10, H04B 7/155, H04W 84/04, H04W 88/08, H04W 72/27

(54) **RADIO NODE AND RADIO COMMUNICATION METHOD**
FUNKNODE UND FUNKKOMMUNIKATIONSVERFAHREN
NODE RADIO ET MÉTHODE DE COMMUNICATION RADIO

(43) Date of publication of application: 27.10.2021
(73) Proprietor: NTT DOCOMO, INC., Chiyoda-ku Tokyo 100-6150 (JP)
(72) Inventor: HARADA, Hiroki, Tokyo 100-6150 (JP); TAKEDA, Kazuaki, Tokyo 100-6150 (JP)
(74) Representative: Hoffmann Eitle
(86) International application number: PCT/JP2018/047125
(87) International publication number: WO 2020/129229

(56) References cited:
- EP-A1- 3 651 526
- HUAWEI ET AL: "On resource coordination and dynamic scheduling in IAB", 3 November 2018 (2018-11-03), pages 1 - 5, XP051478357, Retrieved from the Internet <URL:http://www.3gpp.org/ftp/tsg%5Fran/WG1%5FRL1/TSGR1%5F95/Docs/R1%2D1812201%2Ezip>
- HUAWEI; HISILICON: "On resource coordination and dynamic scheduling in IAB", 3GPP DRAFT; R1-1812201, 16 November 2018 (2018-11-16), Spokane, USA, pages 1 - 5, XP051478357

## Description

### Technical Field

The present disclosure relates to a radio node and a radio communication method.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

For future radio communication systems (e.g., 5G), a technique of Integrated Access and Backhaul (IAB) that integrates an access link and a backhaul link has been studied (Non-Patent Literature (hereinafter referred to as "NPL") 1). In IAB, a radio node like an IAB node forms a radio access link with a User Equipment (UE), and also forms a wireless backhaul link with another IAB node and/or a radio base station.

### Citation List

### Non-Patent Literature

NPL 1
3GPP TR 38.874 1.0.0, "3rd Generation Partnership Project; Technical Specification Group Radio Access Network; Study on Integrated Access and Backhaul; (Release 15)," December 2018

### Patent Literature

EP 3 651 526 A1, which represents the state of the art in accordance with Article 54(3) EPC, 11 relates to a method of operating a node in a wireless communication system and a device using the same. The method includes connecting to a parent node through an initial access process; receiving, from the parent node, first allocation information related with communication with the parent node and second allocation information related with communication with a child node and communicating with the parent node or the child node using a specific resource based on the first allocation information and the second allocation information.

3GPP DRAFT R1-1812201, HUAWEI ET AL: "On resource coordination and dynamic scheduling in IAB" provides a discussion on an unified resource allocation mechanism supporting both semi-static and dynamic resource coordination between parent link and child link.

### Summary of Invention

### Technical Problem

However, inter-radio-node resource configuration has not been studied comprehensively, so that further studies are demanded.

An object of one aspect of the present disclosure is to provide a radio node and a radio communication method making it possible to appropriately perform the inter-radio-node resource configuration.

### Solution to Problem

The object of the invention is achieved by the subject-matter of the independent claims. Advantageous embodiments are defined in the dependent claims. Further examples are provided for facilitating the understanding of the invention.

### Advantageous Effects of Invention

According to the present disclosure, it is possible to appropriately perform inter-radio-node resource configuration.

### Brief Description of Drawings

FIG. 1 illustrates a configuration example of a radio communication system according
   to one aspect of the present disclosure;
FIG. 2 illustrates a configuration example of IAB nodes according to one aspect of the present disclosure;
FIG. 3 illustrates an example of Downlink (DL) and Uplink (UL) configuration information in Time Division Duplex (TDD) according to one aspect of the present disclosure;
FIG. 4 illustrates a first example of configuration information on resources for a Distributed Unit (DU) in Application example 1 according to one aspect of the present disclosure;
FIG. 5 illustrates a second example of the configuration information on the resources for the DU in Application example 1 according to one aspect of the present disclosure;
FIG. 6A illustrates a first example of configuration information on resources for a DU in Application example 2 according to one aspect of the present disclosure;
FIG. 6B illustrates a second example of the configuration information on the resources for the DU in Application example 2 according to one aspect of the present disclosure;
FIG. 7A illustrates a third example of the configuration information on the resources for the DU in Application example 2 according to one aspect of the present disclosure;
FIG. 7B illustrates a fourth example of the configuration information on the resources for the DU in Application example 2 according to one aspect of the present disclosure;
FIG. 8 illustrates an example of configuration information on resources for a DU in Application example 3 according to one aspect of the present disclosure; and
FIG. 9 illustrates an example of a hardware configuration of the IAB node and a user equipment according to one aspect of the present disclosure.

### Description of Embodiment

Hereinafter, an embodiment according to one aspect of the present disclosure will be described with reference to the accompanying drawings.

### <Radio Communication System>

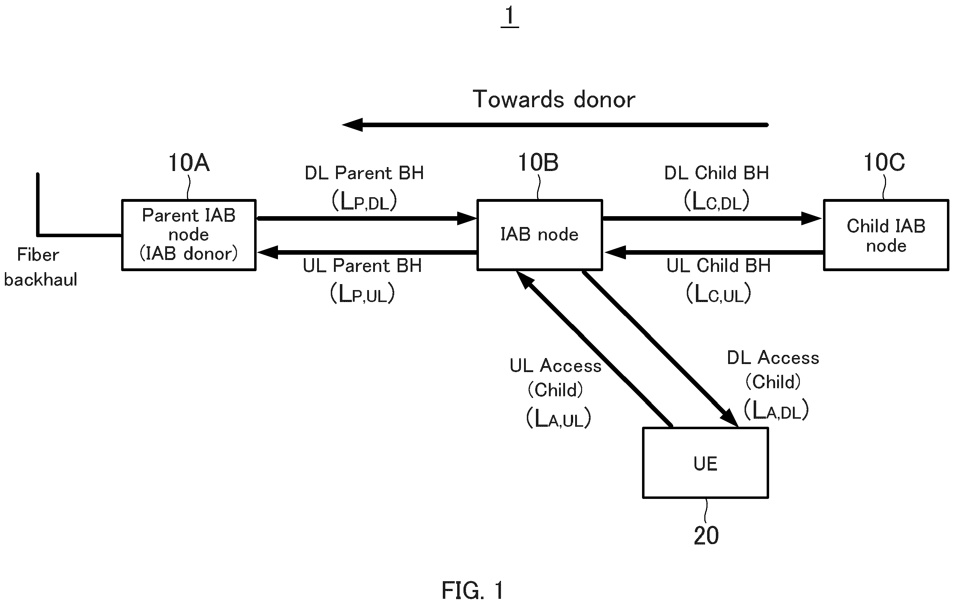

FIG. 1 illustrates a configuration example of a radio communication system according to one embodiment of the present disclosure.

Radio communication system 1 includes a plurality of IAB nodes 10A to 10C as one example of radio nodes, and UE 20 as one example of a user equipment. Hereinafter, to describe IAB nodes 10A to 10C without distinguishing them from one another, only the numeral common to the reference signs may be used as in "IAB nodes 10."

IAB nodes 10A to 10C are interconnected to one another by radio communication. IAB node 10B is connected to IAB node 10A in FIG. 1. IAB node 10C is connected to IAB node 10B. Hereinafter, IAB node 10A located upstream (that is, in the direction nearer an IAB donor) as seen from IAB node 10B is called parent IAB node 10A, and IAB node 10C located downstream (that is, in the direction away from the IAB donor) as seen from IAB node 10B is called child IAB node 10C.

The term "parent IAB node 10A" denotes that IAB node 10A is a parent IAB node with respect to IAB node 10B, and the term "child IAB node 10C" denotes that IAB node 10C is a child IAB node with respect to IAB node 10B. In other words, IAB node 10B corresponds to a child IAB node with respect to "parent IAB node 10A," and corresponds to a parent IAB node with respect to "child IAB node 10C."

Each of IAB nodes 10A to 10C forms a cell, which is an area in which the IAB node is able to perform radio communication. That is, each of IAB nodes 10 has a function as a base station. UE 20 in a cell is able to connect by radio to IAB node 10 forming the cell.

IAB node 10A may also be connected to a Core Network (CN) through a Fiber Backhaul (BH). In this case, IAB node 10A may also be called "IAB donor." In addition, although FIG. 1 illustrates three IAB nodes 10 and one UE 20, any number of IAB nodes 10 and any number of UEs 20 may be included in radio communication system 1. There may also be two or more parent IAB nodes with respect to one IAB node 10 and two or more child IAB nodes with respect to one IAB node 10.

Note that, Ls and their respective subscripts illustrated in FIG. 1 denote the following:
- "L_{P,DL}" denotes a Downlink (DL) from parent IAB node 10A to IAB node 10B;
- "L_{P,UL}" denotes a Uplink (UL) from IAB node 10B to parent IAB node 10A;
- "L_{C,DL}" denotes the DL from IAB node 10B to child IAB node 10C;
- "L_{C,UL}" denotes the UL from child IAB node 10C to IAB node 10B;
- "L_{A,DL}" denotes the DL from IAB node 10B to UE 20; and
- "L_{A,UL}" denotes the UL from UE 20 to IAB node 10B.

### <IAB Node>

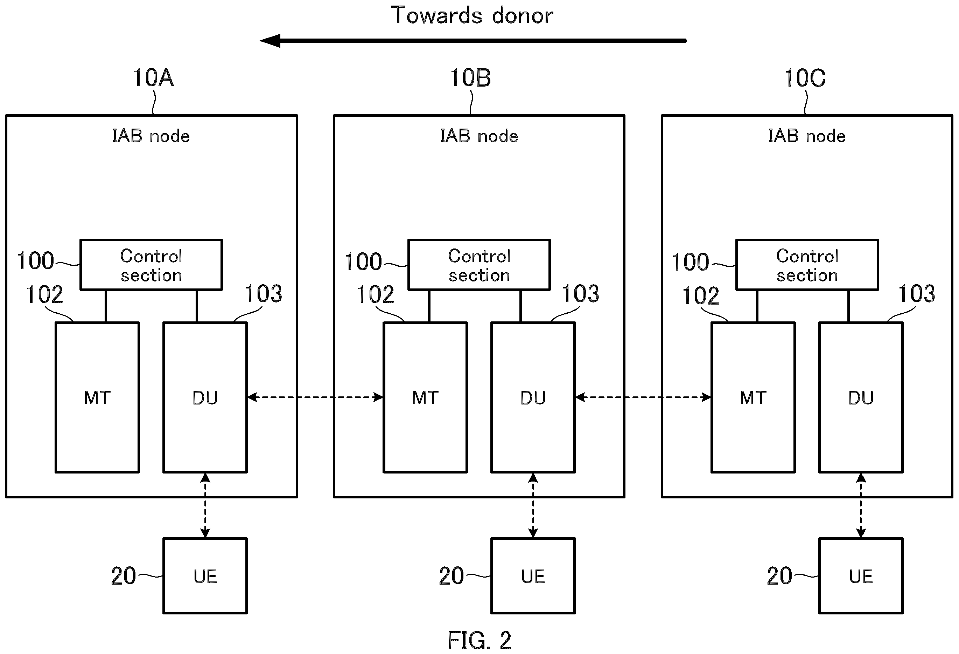

FIG. 2 illustrates a configuration example of IAB nodes 10.

As illustrated in FIG. 2, each of IAB nodes 10 includes control section 100, Mobile Termination (MT) 102, and Distributed Unit (DU) 103. MT 102 and DU 103 may be functional blocks. Hereinafter, a function of MT 102 may be expressed as "MT" without the reference sign, and a function of DU 103 may be expressed as "DU" without the reference sign. DU 103 may have functions corresponding to those of the base station or an extension station. One example of MT 102 may have functions corresponding to those of the user equipment.

IAB node 10B is connected to upstream IAB node (or IAB donor) 10A by MT 102. That is, MT 102 of IAB node 10B treats connection to parent IAB node 10A.

IAB node 10B is connected to UE 20 and to the MT of downstream IAB node 10C by DU 103. That is, DU 103 of IAB node 10B treats connection to UE 20 and to child IAB node 10C. The connection to UE 20 and/or to child IAB node 10C by DU 103 is establishment of a Radio Resource Control (RRC) channel, for example.

Control section 100 controls MT 102 and DU 103. Operation of IAB node 10 described below may be implemented by control section 100 controlling MT 102 and DU 103. Control section 100 may also be provided with a storage section for storing therein a variety of information.

Parent IAB node 10A indicates the following time resources for a link with parent IAB node 10A (hereinafter, referred to as "parent link") from a viewpoint of MT 102 of IAB node 10B:
- DL time resource (time resource used for DL);
- UL time resource (time resource used for UL); and
- Flexible (hereinafter, referred to as "FL") time resource (time resource used for DL or UL).

IAB node 10B, from a viewpoint of DU 103 of IAB node 10B, has the following types of time resources for a link between IAB node 10B and child IAB node 10C, and/or, for a link between IAB node 10B and UE 20 (these links are hereinafter referred to as "child link"):
- DL time resource;
- UL time resource;
- FL time resource; and
- Not-available (hereinafter, referred to as "NA") time resource (a resource which is not used for communication over each of the child links of the DU).

Each of the DL, UL, and FL time resources for the child link of the DU belongs to one of the following two classifications:
- Hard: the time resource corresponding to this classification is always available for the child link of the DU; and
- Soft: the availability of the time resource corresponding to this classification for the child link of the DU is controlled by parent IAB node 10A explicitly and/or implicitly.

### <Study>

3GPP has discussed specifications of a mechanism for sharing time resources between IAB nodes 10 and between backhaul and access links under the assumption that IAB nodes 10 perform time division multiplexing (TDM) operation subject to a half-duplex constraint. Note that 3GPP is an abbreviation for Third Generation Partnership Project. Note also that TDM is an abbreviation for Time Division Multiplexing. For example, specifications relating to the following (A1) to (A3) have been discussed.

(A1) Specifications for child-IAB-node DU resource types have been discussed. DL-hard (DL-H), DL-soft (DL-S), UL-hard (UL-H), Flexible-hard (F-H), Flexible-soft (F-S), and Not-Available (NA) have been discussed as the DU resource types.

(A2) Specifications for dynamic indication made when Soft resources are available for a child-IAB-node DU have been discussed. The dynamic indication is made, for example, by Layer1 (L1) signaling.

(A3) Specifications for transmission and reception rules for IAB nodes and behavior related to resource usage have been discussed.

Note that, a resource type used by the DU of IAB node 10B may be configured by parent IAB node 10A. Note that, the "type" of a resource may be replaced with other terms such as "use," "kind," "class," "category," or "attribute" of the resource. Note also that, NPL 1 describes an operation example for each combination of resource configuration for DU (hereinafter, referred to as "DU resource configuration") and resource configuration for MT (hereinafter, referred to as "MT resource configuration") in the case of TDM operation.

Although the study on the DU resource configuration has been developed, a detailed study on the DU resource configuration is insufficient. Here, following Proposal 1 and Proposal 2 can be considered for a method of DU resource configuration.

### <Proposal 1>

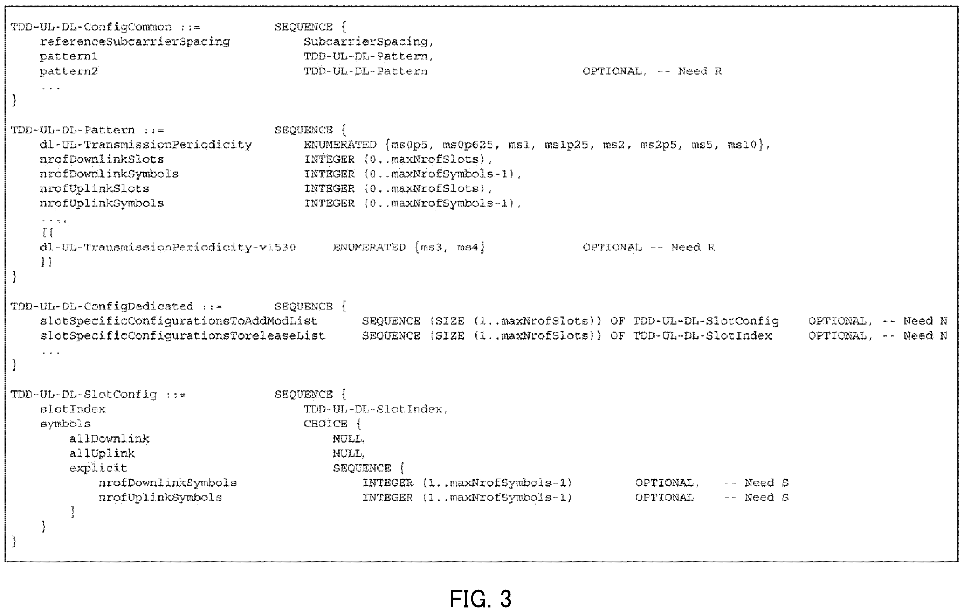

It is conceivable that configuration information for resources for a UE (hereinafter, referred to as "UE resource configuration information") is reused as configuration information for resources for a DU (hereinafter, referred to as "DU resource configuration information"). FIG. 3 illustrates an example of the UE resource configuration information "TDD-UL-DL-Config." Note that, the term "configuration information" may be replaced with other terms such as "Information Element."

Among several candidate periodicities, up to two TDD patterns starting with a DL resource and ending with a UL resource can be combined in the UE resource configuration information "TDD-UL-DL-ConfigCommon" as illustrated in FIG. 3.

Further, as illustrated in FIG. 3, a slot-level TDD pattern starting with a DL resource and ending with a UL resource can be configured for each slot within a period of 10 ms in the UE resource configuration information "TDD-UL-DL-ConfigDedicated."

Here, in the DU resource configuration related to IAB node 10, the above-described configurations for "Hard," "Soft," and "NA" are required in addition to the configurations for DL, UL, and FL resources, so that the UE resource configuration information "TDD-UL-DL-Config" cannot be reused as it is.

### <Proposal 2>

It is conceivable that one of the resource types "DL-H," "DL-S," "UL-H," "FL-H," "FL-S," and "NA" is configured for each symbol within a predetermined period for the purpose of maximizing the flexibility of DU resource configuration. This Proposal 2 offers a high flexibility, but may increase signaling overhead.

The present embodiment discloses a method for enabling DU resource configuration with moderate flexibility (in other words, with necessary and sufficient flexibility). In addition, above-mentioned Proposals 1 and 2 have advantages and disadvantages; hence, the present embodiment also discloses a method for enabling DU resource configuration with moderate flexibility while preventing an increase in signaling overhead.

### <Method 1>

Method 1 uses, as DU resource configuration information, partially modified "TDD-UL-DL-SlotConfig," which is exemplary slot-by-slot configuration information. Application examples 1, 2, and 3 of Method 1 will be described. Note that Application examples 1, 2, and 3 below may be explicitly or implicitly switchable.

### «Application Example 1»

The DU resource configuration information used in Application example 1 is the configuration information "TDD-UL-DL-SlotConfig" partially modified for the purpose of configuring "Hard" or "Soft" for each slot.

For example, the configuration information "TDD-UL-DL-SlotConfig" partially modified for the purpose of collectively configuring DL, UL, and FL resources in a slot as "Hard" or "Soft" is used as the DU resource configuration information. Alternatively, the configuration information "TDD-UL-DL-SlotConfig" partially modified for the purpose of individually configuring each of the DL, UL, and FL resources in a slot as "Hard" or "Soft" is used as the DU resource configuration information.

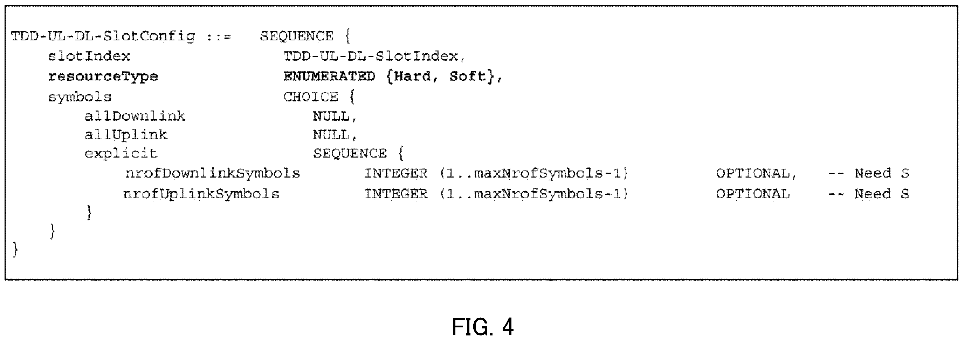

FIG. 4 illustrates an example of the DU resource configuration information "TDD-UL-DL-SlotConfig" which makes it possible to collectively configure the DL, UL, and FL resources in a slot as "Hard" or "Soft."

As illustrated in bold in FIG. 4, the DU resource configuration information "TDD-UL-DL-SlotConfig" may include a parameter for collectively configuring the DL, UL, and FL resources in a slot as "Hard" or "Soft." Hereinafter, such a parameter is referred to as "resourceType" for convenience, but is not particularly limited to this name.

For example, when a value indicating "Hard" is configured as the parameter "resourceType" in the DU resource configuration information "TDD-UL-DL-SlotConfig," IAB node 10 may recognize the resource types of the DL, UL, and FL resources in the slot as "DL-H," "UL-H," and "F-H," respectively. Note that, the word "recognize" may also be expressed by "assume," "determine," or "judge." Further, when a value indicating "Soft" is configured as the parameter "resourceType" in the DU resource configuration information "TDD-UL-DL-SlotConfig," IAB node 10 may recognize the resource types of the DL, UL, and FL resources in a slot as "DL-S," "UL-S," and "F-S," respectively.

Note that, configuring the parameter "resourceType" may be optional. In this case, a default value (either "Hard" or "Soft") used when the parameter "resourceType" is not configured may be defined in advance by specifications or the like. This parameter may be configured for configuring a resource type different from the default value.

Note also that, the above parameter "resourceType" is an example. That is, the parameter name for collectively configuring the DL, LTL, and FL resources in a slot as "Hard" or "Soft" may differ from that described above. The same applies to the following descriptions.

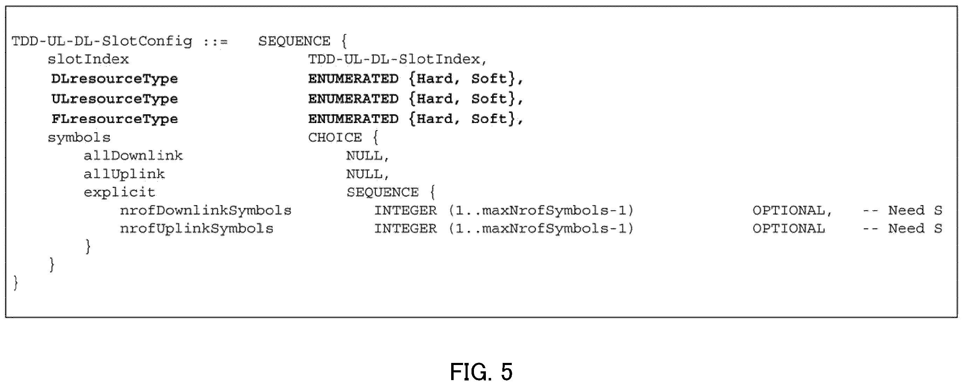

FIG. 5 illustrates an example of the DU resource configuration information "TDD-UL-DL-SlotConfig" which makes it possible to individually configure each of the DL, UL, and FL resources in a slot as "Hard" or "Soft."

As illustrated in bold in FIG. 5, the DU resource configuration information "TDD-UL-DL-SlotConfig" may include a parameter "DLresourceType" for configuring the DL resource in the slot as "Hard" or "Soft." Further, the DU resource configuration information "TDD-UL-DL-SlotConfig" may include a parameter "ULresourceType" for configuring the UL resource in the slot as "Hard" or "Soft." Further, the DU resource configuration information "TDD-UL-DL-SlotConfig" may include a parameter "FLresourceType" for configuring the FL resource in the slot as "Hard" or "Soft."

For example, when a value indicating "Soft" is configured as the parameter "DLresourceType" in the DU resource configuration information "TDD-UL-DL-SlotConfig," IAB node 10 may recognize the resource type of the DL resource in the slot as "DL-S." Further, when a value indicating "Hard" is configured as the parameter "ULresourceType" in the DU resource configuration information "TDD-UL-DL-SlotConfig," IAB node 10 may recognize the resource type of the UL resource in the slot as "UL-H." Further, when a value indicating "Soft" is configured as the parameter "FLresourceType" in the DU resource configuration information "TDD-UL-DL-SlotConfig," IAB node 10 may recognize the resource type of the FL resource in the slot as "F-S."

Note that, configuration of at least one of the parameters "DLresourceType," "ULresourceType," and "FLresourceType" may be optional. In this case, a default value (either "Hard" or "Soft") used when a parameter corresponding to "optional" is not configured may be defined in advance by specifications or the like. Such a parameter corresponding to "optional" may be configured for configuring a resource type different from the default value.

Note also that, the parameter names of "DLresourceType," "ULresourceType" and "FLresourceType" are one examples. That is, the parameter names for individually configuring each of the DL, UL, and FL resources in a slot as "Hard" or "Soft" may differ from those described above. The same applies to the following descriptions.

### <<Application Example 2>>>

The DU resource configuration information used in Application example 2 is the configuration information "TDD-UL-DL-SlotConfig" partially modified for the purpose of configuring on a slot-by-slot basis whether a resource is NA or not.

For example, the configuration information "TDD-UL-DL-SlotConfig" partially modified for the purpose of collectively configuring whether DL, UL, and FL resources in a slot are "NA" or not is used as the DU resource configuration information. Alternatively, the configuration information "TDD-UL-DL-SlotConfig" partially modified for the purpose of individually configuring whether each of the DL, UL, and FL resources in a slot is "NA" or not is used as the DU resource configuration information.

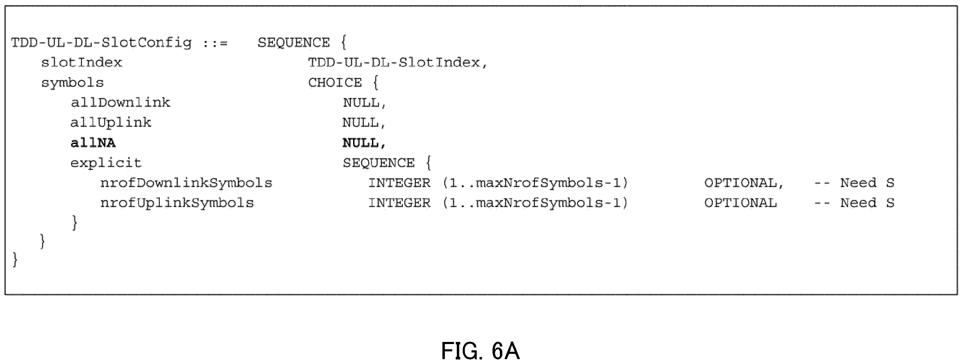

FIG. 6A illustrates an example of the DU resource configuration information "TDD-UL-DL-SlotConfig" which makes it possible to collectively configure whether the DL, UL, and FL resources in a slot are "NA" or not.

As illustrated in bold in FIG. 6A, the DU resource configuration information "TDD-UL-DL-SlotConfig" may include a parameter for collectively configuring whether the DL, UL, and FL resources in the slot are "NA" or not. Hereinafter, such a parameter is referred to as "allNA" for convenience, but is not particularly limited to this name.

For example, when a value indicating "NA" is configured as the parameter "allNA" in the DU resource configuration information "TDD-UL-DL-SlotConfig," IAB node 10 may recognize the resource types of the DL, UL, and FL resources in the slot as NA.

Note that, IAB node 10 may recognize, as "NA," the resource type for a slot with a slot index for which the configuration information "TDD-UL-DL-SlotConfig" is not configured in DU resource configuration.

Further, the DU resource configuration information "TDD-UL-DL-SlotConfig" may include, instead of the aforementioned parameter for configuring whether the resources are "NA" or not, a parameter for configuring whether the resources are "Available" or not.

Further, as illustrated in bold in 6B, the DU resource configuration information "TDD-UL-DL-SlotConfig" may include, instead of the aforementioned parameter for configuring whether or not the resources are "NA" or not, a parameter for configuring the DL, UL, or FL resource to be set as NA. Hereinafter, such a parameter is referred to as "NAresource" for convenience, but is not particularly limited to this name. In addition, the parameter "NAresource" does not have to include an option of "FL." Note that, the term "option" may also be replaced with another term, such as "candidate value."

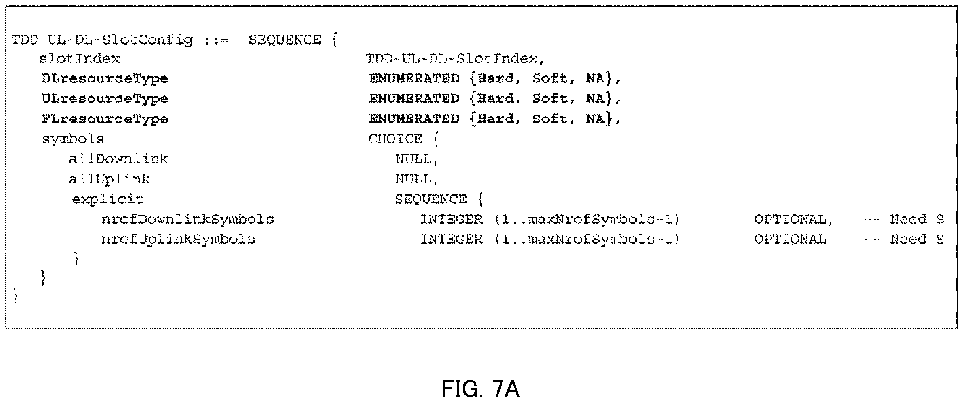

FIG. 7A illustrates an example of the DU resource configuration information "TDD-UL-DL-SlotConfig" which makes it possible to individually configure each of the DL, UL, and FL resources in a slot as "Hard," "Soft," or "NA."

As illustrated in bold in FIG. 7A, the DU resource configuration information "TDD-UL-DL-SlotConfig" may include a parameter for configuring the DL resource in the slot as "Hard," "Soft," or "NA." Hereinafter, such a parameter is referred to as "DLresourceType" for convenience, but is not particularly limited to this name. Further, the DU resource configuration information "TDD-UL-DL-SlotConfig" may include a parameter for configuring the UL resource in the slot as "Hard," "Soft," or "NA." Hereinafter, such a parameter is referred to as "ULresourceType" for convenience, but is not particularly limited to this name. Further, the DU resource configuration information "TDD-UL-DL-SlotConfig" may include a parameter for configuring the FL resource in the slot as "Hard," "Soft," or "NA." Hereinafter, such a parameter is referred to as "FLresourceType" for convenience, but is not particularly limited to this name.

For example, when a value indicating "Hard" is configured as the parameter "DLresourceType" in the DU resource configuration information "TDD-UL-DL-SlotConfig," IAB node 10 may recognize the resource type of the DL resource in the slot as "DL-H." Further, when a value indicating "NA" is configured as the parameter "ULresourceType" in the DU resource configuration information "TDD-UL-DL-SlotConfig," IAB node 10 may recognize the resource type of the UL resource in the slot as "NA." Further, when a value indicating "Soft" is configured as the parameter "FLresourceType" in the DU resource configuration information "TDD-UL-DL-SlotConfig," IAB node 10 may recognize the resource type of the FL resource in the slot as "F-S."

Note that, configuration of at least one of the parameters "DLresourceType," "ULresourceType," and "FLresourceType" may be optional. In this case, a default value (either "Hard," "Soft," or "NA") used when a parameter corresponding to "optional" is not configured may be defined in advance by specifications or the like. Such a parameter corresponding to "optional" may be configured for configuring a resource type different from the default value.

Note also that, at least one of the parameters "DLresourceType," "ULresourceType," and "FLresourceType" does not have to include an option of "NA." For example, the parameter "FLresourceType" does not have to include the option of "NA."

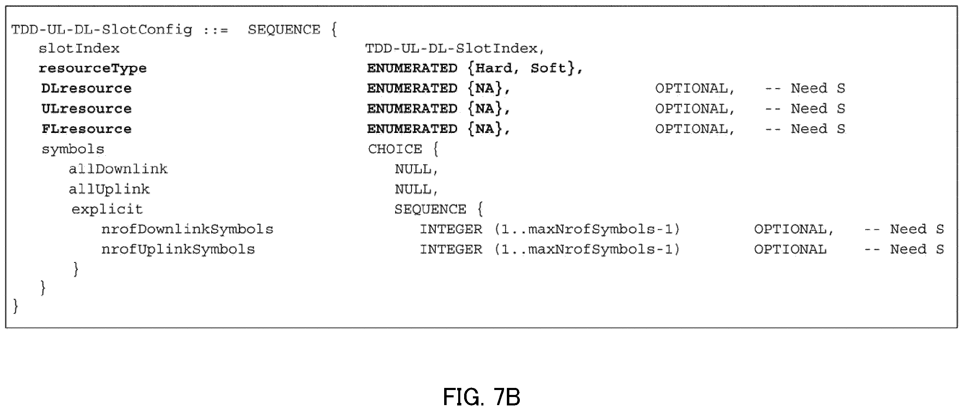

FIG. 7B illustrates an example of the DU resource configuration information "TDD-UL-DL-SlotConfig" which makes it possible to collectively configure the DL, UL, and FL resources in a slot as "Hard" or "Soft" and also makes it possible to individually configure whether each of the DL, UL, and FL resources in the slot is "NA" or not.

As illustrated in bold in FIG. 7B, the DU resource configuration information "TDD-UL-DL-SlotConfig" may include a parameter "resourceType" for collectively configuring the DL, UL, and FL resources in the slot as "Hard" or "Soft." Further, the DU resource configuration information "TDD-UL-DL-SlotConfig" may include a parameter "DLresourceType" for configuring whether the DL resource in the slot is "NA" or not. Further, the DU resource configuration information "TDD-UL-DL-SlotConfig" may include a parameter "ULresourceType" for configuring whether the UL resource in the slot is "NA" or not. Further, the DU resource configuration information "TDD-UL-DL-SlotConfig" may include a parameter "FLresourceType" for configuring whether the FL resource in the slot is "NA" or not.

For example, when a value indicating "Hard" is configured as the parameter "resourceType" and a value indicating "NA" is configured as the parameter "DLresourceType" in the DU resource configuration information "TDD-UL-DL-SlotConfig," IAB node 10 may recognize the resource types of the UL and FL resources in the slot as "UL-H" and "FL-H," respectively, and the resource type of the DL resource as "NA."

### <<Application Example 3>>>

The DU resource configuration information used in Application example 3 is the configuration information "TDD-UL-DL-SlotConfig" partially modified for the purpose of configuring, for each symbol within a slot, whether a resource is "NA" or not.

For example, the configuration information "TDD-UL-DL-SlotConfig" partially modified for the purpose of configuring, for a plurality of symbols in a slot, the number of "NA" symbols from the front and/or the end of the slot is used as the DU resource configuration information.

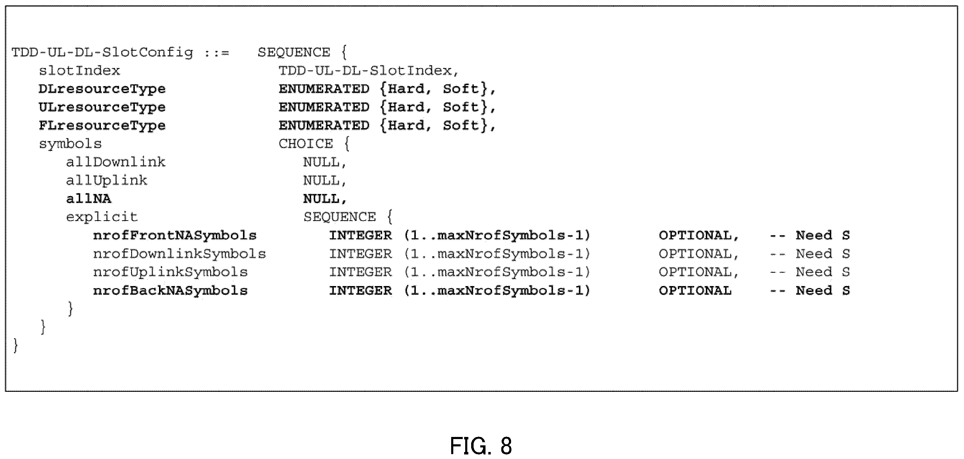

FIG. 8 illustrates an example of the DU resource configuration information "TDD-UL-DL-SlotConfig" which makes it possible to configure, for a plurality of symbols in a slot, the number of "NA" symbols from the front and/or the end of the slot.

As illustrated in bold in FIG. 8, the DU resource configuration information "TDD-UL-DL-SlotConfig" may include a parameter for configuring, for the plurality of symbols in the slot, the number of "NA" symbols from the front toward the end of the slot. Hereinafter, such a parameter is referred to as "nrofFrontNASymbols" for convenience, but is not particularly limited to this name. In addition, the DU resource configuration information "TDD-UL-DL-SlotConfig" may include a parameter "nrofDownlinkSymbols" for configuring, for the plurality of symbols in the slot, the number of "DL" symbols from the symbols designated as "NA" by the above parameter "nrofFrontNASymbols" toward the end.

Further, the DU resource configuration information "TDD-UL-DL-SlotConfig" may include a parameter for configuring, for the plurality of symbols in the slot, the number of "NA" symbols from the end toward the front of the slot. Hereinafter, such a parameter is referred to as "nrofBackNASymbols" for convenience, but is not particularly limited to this name. In addition, the DU resource configuration information "TDD-UL-DL-SlotConfig" may include a parameter "nrofUplinkSymbols" for configuring, for the plurality of symbols in the slot, the number of "UL" symbols from the symbols designated as "NA" by the above parameter "nrofBackNASymbols" toward the front.

In this case, IAB node 10 may recognize, as "NA," the resource type of a configured number of symbols configured by the parameter "nrofFrontNASymbols" from the front toward the end of the slot. In addition, IAB node 10 may recognize, as "NA," the resource type of a configured number of symbols configured by the parameter "nrofBackNASymbols" from the end toward the front of the slot. Note that, IAB node 10 may recognize, as "FL," the resource type of those symbols within the slot which do not correspond to any of the parameters "nrofDownlinkSymbols" and "nrofUplinkSymbols."

In this case, when two symbols from the front are "NA," when four symbols subsequent to "NA" symbols are "DL," when four symbols subsequent to "DL" symbols are "FL," when two symbols subsequent to "FL" symbols are "UL," and when the last two symbols are "NA" in 14-symbol slot configuration, the above parameters may be set as follows:
- nrofFrontNASymbols = 2;
- nrofDownlinkSymbols = 4;
- nrofUplinkSymbols = 2; and
- nrofBackNASymbols = 2.

Note that the parameters expressed in bold in FIG. 8 may be used as follows. That is, the DU resource configuration information "TDD-UL-DL-SlotConfig" may include the parameter "nrofFrontNASymbols" for configuring, for the plurality of symbols in the slot, the number of "NA" symbols from the front toward the end of the slot. The DU resource configuration information "TDD-UL-DL-SlotConfig" may also include the parameter "nrofDownlinkSymbols" for configuring, for the plurality of symbols in the slot, the number of "DL" symbols from the front toward the end of the slot. The DU resource configuration information "TDD-UL-DL-SlotConfig" may also include the parameter "nrofBackNASymbols" for configuring, for the plurality of symbols in the slot, the number of "NA" symbols from the end toward the front of the slot. The DU resource configuration information "TDD-UL-DL-SlotConfig" may also include the parameter "nrofUplinkSymbols" for configuring, for the plurality of symbols in the slot, the number of "UL" symbols from the end toward the front of the slot.

In this case, IAB node 10 may recognize, as "NA," the resource type of a configured number of symbols configured by the parameter "nrofFrontNASymbols" from the front toward the end of the slot. In addition, IAB node 10 may recognize, as "NA," the resource type of a configured number of symbols configured by the parameter "nrofBackNASymbols" from the end toward the front of the slot. Note that, IAB node 10 may recognize, as "FL," the resource type of symbols within the slot which do not correspond to any of the parameters "nrofDownlinkSymbols" and "nrofUplinkSymbols."

In this case, when two symbols from the front are "NA," when four symbols subsequent to "NA" symbols are "DL," when four symbols subsequent to "DL" symbols are "FL," when two symbols subsequent to "FL" symbols are "UL," and when the last two symbols are "NA" in 14-symbol slot configuration, the above parameters may be set as follows:
- nrofFrontNASymbols = 2;
- nrofDownlinkSymbols = 6;
- nrofUplinkSymbols = 4; and
- nrofBackNASymbols = 2.

That is, in this case, the number of DL symbols from the front may be configured as the parameter "nrofDownlinkSymbols," and the number of those symbols among the DL symbols which are to be designated as "NA" from the front may be configured as the parameter "nrofFrontNASymbols." Further, the number of UL symbols from the end may be configured as the parameter "nrofUplinkSymbols," and the number of those symbols among the UL symbols which are to be designated as "NA" from the end may be configured as the parameter "nrofBackNASymbols."

Here, one reason for configuring symbol(s) at a front portion and/or an end portion of the slot as "NA" is as follows. That is, it is highly likely that resources configured for PDCCH, PUCCH, and/or the like for a MT are mapped to the symbols at the front and/or end of the slot and these symbols are set to NA in the DU resource configuration. In addition, another reason is that it is considered that there are few cases where it is desired to urgently set, to NA, resources (for example, symbols) at a central portion of the slot. That is, it is considered that, while there are cases where partial resources at the slot ends are desired to be set to NA for a specific use, there are few cases where resources in the central portion of the slot are desired to be set to NA (that is, desired to be recognized as NA) midway in the slot.

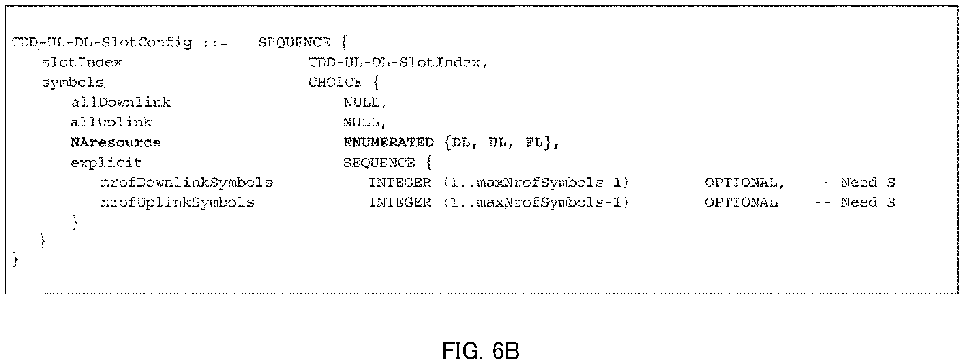

Note that Application example 3 may be combined with at least one of Application examples 1 and 2. For example, as illustrated in FIG. 8, the DU resource configuration information "TDD-UL-DL-SlotConfig" may include the parameters "DLresourceType," "ULresourceType," and "FLresourceType" described above with reference to FIG. 5, and/or the parameter "allNA" described above with reference to FIG. 6.

Note also that the above-described method for designating the symbols as NA is an example. For example, the DU resource configuration information "TDD-UL-DL-SlotConfig" does not have to include either the parameter "nrofFrontNASymbols" or "nrofBackNASymbols."

Note also that the parameter names of "nrofFrontNASymbols" and "nrofBackNASymbols" are one examples. That is, the parameter names for configuring, for a plurality of symbols in a slot, the number of "NA" symbols may be different from those described above.

### <Method 2>

As for the DU resources whose resource types are configured by the DU resource configuration information (e.g., TDD-UL-DL-SlotConfig), IAB node 10 recognizes, as "NA," the resource type of those resources which are configured for a predetermined purpose or use by configuration information for resources for a MT (hereinafter, referred to as "MT resource configuration information").

For example, in the DU resource configuration, IAB node 10 may recognize, as "NA," the resource type of those resources which are configured for SS/PBCH Block Measurement Time Configuration (SMTC) by the MT resource configuration information.

By way of further example, in the DU resource configuration, IAB node 10 may recognize, as "NA," the resource type of those resources which are configured for a PDCCH search space set by the MT resource configuration information. Note that, in this case, IAB node 10 may recognize the resources configured for a specific search space set (e.g., common search space set) as the resource type "NA" in the DU resource configuration. Note also that, PDCCH is the abbreviation for Physical Downlink Control Channel.

By way of further example, in the DU resource configuration, IAB node 10 may recognize, as "NA," the resource type of those resources which are configured for a RACH occasion by the MT resource configuration information "RACH configuration." Note that, RACH is an abbreviation for Random Access Channel.

Note that, when IAB node 10 is subject to half-duplex constraint, the IAB node may recognize the resource type as "NA" in the DU resource configuration as described above. When IAB node 10 is not subject to half-duplex constraint, the IAB node does not recognize even resources falling under the above examples as "NA" in the DU resource configuration, and may use such resources in accordance with the DU resource configuration. Examples of IAB node 10 that is not subject to half-duplex constraint include IAB nodes 10 which support full-duplex, IAB nodes 10 which have a plurality of transmission and reception antenna panels, and the like.

Note also that, IAB node 10B may notify parent IAB node 10A of Capability Information indicating whether IAB node 10B supports half-duplex or full-duplex. Alternatively, IAB node 10B may also transmit the number of transmission and reception antenna panels included in IAB node 10B as capability information to parent IAB node 10A, and parent IAB node 10A may recognize, based on the capability information, whether IAB node 10B supports half-duplex or full-duplex.

Note that, while one of IAB nodes 10 supporting half-duplex is transmitting data, another one of the IAB nodes which is receiving the data may not be capable of transmitting data. Note also that, while one of IAB nodes 10 supporting full-duplex is transmitting data, another one of the IAB nodes which is receiving the data may be capable of transmitting data.

Note also that, IAB node 10 may apply above-described method 2 in combination with above-described method 1.

### <Summary of Disclosure>

The radio node according to the present disclosure includes: a reception section that receives DU resource configuration information which makes it possible to configure a resource type indicative of a use for a DU resource; and a control section that controls usage of the DU resource based on the resource type configured in the DU resource configuration information. Here, the resource type may be at least one of "DL-H," "DL-S," "UL-H," "UL-S," "F-H," "F-S," and "NA" as described above.

In addition, the DU resource configuration information may be the partially modified configuration information "TDD-UL-DL-SlotConfig." Further, the DU resource configuration information may make it possible to collectively or individually configure the DL, UL, and FL resources in a slot as "Hard" or "Soft." Further, the DU resource configuration information may make it possible to collectively or individually configure whether the DL, UL, and FL resources are "NA" or not. Further, the DU resource configuration information may make it possible to configure the resource type of a part of a plurality of symbols in a slot.

According to the above descriptions, it is possible to configure, for slots or a part of a plurality of symbols, resource types collectively or individually in the DU resource configuration information, so that it is possible to configure, for the DU resources, the resource types with moderate (in other words, necessary and sufficient) flexibility while preventing an increase in signaling overhead.

The present disclosure has been described above.

### <Hardware Configuration and/or the like>

Note that, the block diagrams used to describe the above embodiment illustrate blocks on a function-by-function basis. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmission section," "transmitting unit," or "transmitter." The methods for implementing the functions are not limited specifically as described above.

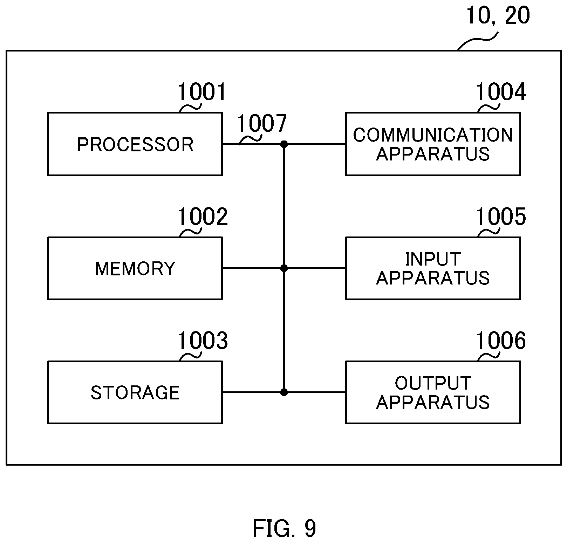

For example, the base station, user equipment, and the like according to an embodiment of the present disclosure may function as a computer that executes processing of a radio communication method of the present disclosure. FIG. 9 illustrates one example of a hardware configuration of an IAB node and a user equipment according to one embodiment of the present disclosure. IAB node 10 and user equipment 20 described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of IAB node 10 and of user equipment 20 may include one apparatus or a plurality of apparatuses illustrated in the drawings or may not include part of the apparatuses.

The functions of IAB node 10 and user equipment 20 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 100 and the like as described above may be implemented by processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, control section 100 of IAB node 10 may be implemented by a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. Note that the program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, antennas and the like of the base station and the user equipment may be realized by communication device 1004. A transmission/reception section may be implemented with a transmission section and a reception section physically or logically separated from each other.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, IAB node 10 and user equipment 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### <Notification and Signaling of Information>

The notification of information is not limited to the aspects or embodiments described in the present disclosure, and the information may be notified by another method. For example, the notification of information may be carried out by one or a combination of physical layer signaling (for example, Downlink Control Information (DCI) and Uplink Control Information (UCI)), upper layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### <Applied System>

The aspects and embodiments described in the present specification may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### <Processing Procedure and the like>

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### <Operation of Base Station>

Specific operations which are described in the present disclosure as being performed by the base station may sometimes be performed by an upper node depending on the situation. Various operations performed for communication with a user equipment in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### <Direction of Input and Output>

The information or the like (see the item of "Information and Signals") can be output from a higher layer (or a lower layer) to a lower layer (or a higher layer). The information, the signals, and the like may be input and output through a plurality of network nodes.

### <Handling of Input and Output Information and the like>

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variations and the like of Aspects>

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications of the aspects of the present disclosure can be made without departing from the scope the appended claims. Therefore, the description of the present disclosure is intended for exemplary description.

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

### <Information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### <"System" and "Network">

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements can be identified by any suitable names, and various names assigned to these various channels and information elements are not limitative in any respect.

### <Base Station>

The terms "Base Station (BS)," "radio base station," "fixed station," "NodeB," "eNodeB (eNB)," "gNodeB (gNB)," "access point," "transmission point," "reception point, "transmission/reception point," "cell," "sector," "cell group," "carrier," and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### <Mobile Station>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### <Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). Note that, at least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user equipment. For example, the aspects and the embodiments of the present disclosure may find application in a configuration that results from replacing communication between the base station and the user equipment with communication between multiple user equipments (such communication may, e.g., be referred to as device-to-device (D2D), vehicle-to-everything (V2X), or the like). In this case, user equipment 20 may be configured to have the functions that base station 10 described above has. The wordings "uplink" and "downlink" may be replaced with a corresponding wording for inter-equipment communication (for example, "side"). For example, an uplink channel, a downlink channel, and the like may be replaced with a side channel.

Similarly, the user equipment in the present disclosure may be replaced with the base station. In this case, base station 10 is configured to have the functions that user equipment 20 described above has.

### <Meaning and Interpretation of Terms>

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

### <Reference Signal>

The reference signal can also be abbreviated as an RS and may also be called as a pilot depending on the applied standard.

### <Meaning of "based on">

The description "based on" used in the present disclosure does not mean "based only on," unless otherwise specified. In other words, the description "based on" means both of "based only on" and "based at least on."

### <Terms "first" and "second">

Any reference to elements by using the terms "first," "second," and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <"Means">

The "means" in the configuration of each apparatus described above may be replaced with "section," "circuit," "device," or the like.

### <Open-ended Format>

In a case where terms "include," "including," and their modifications are used in the present disclosure, these terms are intended to be inclusive like the term "comprising." Further, the term "or" used in the present disclosure is not intended to be an exclusive or.

### <Time Units such as a TTI, Frequency Units such as an RB, and a Radio Frame Configuration>

The radio frame may be constituted by one frame or a plurality of frames in the time domain. The one frame or each of the plurality of frames may be called a subframe in the time domain.

The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user equipment) on a TTI-by-TTI basis to each user equipment. Note that, the definition of TTI is not limited to this.

The TTI may be a time unit for transmitting a channel-coded data packet (a transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

Note that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP. The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

### <Maximum Transmit Power>

The "maximum transmit power" described in the present disclosure may mean a maximum value of the transmit power, the nominal UE maximum transmit power, or the rated UE maximum transmit power.

### <Article>

In a case where articles, such as "a," "an," and "the" in English, for example, are added in the present disclosure by translation, nouns following these articles may have the same meaning as used in the plural.

### <"Different">

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### Industrial Applicability

One aspect of the present disclosure is useful for radio communication systems.

### Reference Signs List

10, 10A, 10B, 10C IAB node
20 User equipment
100 Control section
102 Mobile-Termination (MT)
103 Distributed Unit (DU)

## Claims

1. A radio node (20), comprising:
a reception section configured to receive configuration information for a Distributed Unit, DU; and
a control section configured to configure a slot format for the DU based on the configuration information for the DU, **characterized in that**
the configuration information for the DU includes a first parameter for collectively configuring a resource type of "hard," "soft," or "Not-available" to Downlink symbols within one slot.

2. The radio node (20) according to claim 1, wherein
the configuration information for the DU includes a second parameter for collectively configuring the resource type of "hard," "soft," or "Not-available" to Uplink symbols within one slot.

3. The radio node (20) according to claim 1, wherein
the configuration information for the DU includes a third parameter for collectively configuring the resource type of "hard," "soft," or "Not-available" to Flexible symbols within one slot.

4. A radio communication method, comprising the following performed by a radio node (20):
receiving configuration information for a Distributed Unit, DU; and
configuring a slot format for the DU based on the configuration information for the DU, **characterized in that**
the configuration information for the DU includes a first parameter for collectively configuring a resource type of "hard," "soft," or "Not-available" to Downlink symbols within one slot.

5. The radio communication method according to claim 4, wherein
the configuration information for the DU includes a second parameter for collectively configuring the resource type of "hard," "soft," or "Not-available" to Uplink symbols within one slot.

6. The radio communication method according to claim 4, wherein
the configuration information for the DU includes a third parameter for collectively configuring the resource type of "hard," "soft," or "Not-available" to Flexible symbols within one slot.

## Patentansprüche

1. Funknode (20), umfassend:
einen Empfangsabschnitt, der konfiguriert ist, um Konfigurationsinformationen für eine verteilte Einheit, DU, zu empfangen; und
einen Steuerabschnitt, der konfiguriert ist, um ein Schlitzformat für die DU basierend auf den Konfigurationsinformationen für die DU zu konfigurieren, **dadurch gekennzeichnet, dass**
die Konfigurationsinformationen für die DU einen ersten Parameter zum kollektiven Konfigurieren eines Ressourcentyps von "hart", "weich" oder "nicht verfügbar" für Downlink-Symbole innerhalb eines Schlitzes einschließen.

2. Funknode (20), nach Anspruch 1, wobei
die Konfigurationsinformationen für die DU einen zweiten Parameter zum kollektiven Konfigurieren des Ressourcentyps von "hart", "weich" oder "nicht verfügbar" für Uplink-Symbole innerhalb eines Schlitzes einschließen.

3. Funknode (20), nach Anspruch 1, wobei
die Konfigurationsinformationen für die DU einen dritten Parameter zum kollektiven Konfigurieren des Ressourcentyps von "hart", "weich" oder "nicht verfügbar" für flexible Symbole innerhalb eines Schlitzes einschließen.

4. Funkkommunikationsverfahren, das von einem Funknode (20) durchgeführt wird, Folgendes umfasst:
Empfangen von Konfigurationsinformationen für eine verteilte Einheit, DU; und
Konfigurieren eines Schlitzformats für die DU basierend auf den Konfigurationsinformationen für die DU, **dadurch gekennzeichnet, dass**
die Konfigurationsinformationen für die DU einen ersten Parameter zum kollektiven Konfigurieren eines Ressourcentyps von "hart", "weich" oder "nicht verfügbar" für Downlink-Symbole innerhalb eines Schlitzes einschließen.

5. Funkkommunikationsverfahren nach Anspruch 4, wobei
die Konfigurationsinformationen für die DU einen zweiten Parameter zum kollektiven Konfigurieren des Ressourcentyps von "hart", "weich" oder "nicht verfügbar" für Uplink-Symbole innerhalb eines Schlitzes einschließen.

6. Funkkommunikationsverfahren nach Anspruch 4, wobei
die Konfigurationsinformationen für die DU einen dritten Parameter zum kollektiven Konfigurieren des Ressourcentyps von "hart", "weich" oder "nicht verfügbar" für flexible Symbole innerhalb eines Schlitzes einschließen.

## Revendications

1. Noeud radio (20), comprenant :
une section de réception configurée pour recevoir des informations de configuration pour une unité distribuée, DU ; et
une section de commande configurée pour configurer un format de créneau pour la DU sur la base d'informations de configuration pour la DU, **caractérisé en ce que**
les informations de configuration pour la DU incluent un premier paramètre pour configurer collectivement un type de ressource « dur », « souple », ou « non disponible » pour des symboles de liaison descendante dans un créneau.

2. Noeud radio (20) selon la revendication 1, dans lequel
les informations de configuration pour la DU incluent un deuxième paramètre pour configurer collectivement le type de ressource « dur », « souple », ou « non disponible » pour des symboles de liaison montante dans un créneau.

3. Noeud radio (20) selon la revendication 1, dans lequel
les informations de configuration pour la DU incluent un troisième paramètre pour configurer collectivement le type de ressource « dur », « souple », ou « non disponible » pour des symboles flexibles dans un créneau.

4. Procédé de communication radio, comprenant les étapes suivantes réalisées par un noeud radio (20) :
la réception d'informations de configuration pour une unité distribuée, DU ; et la configuration d'un format de créneau pour la DU sur la base des informations de configuration pour la DU, **caractérisé en ce que**
les informations de configuration pour la DU incluent un premier paramètre pour configurer collectivement un type de ressource « dur », « souple », ou « non disponible » pour des symboles de liaison descendante dans un créneau.

5. Procédé de communication radio selon la revendication 4, dans lequel
les informations de configuration pour la DU incluent un deuxième paramètre pour configurer collectivement le type de ressource « dur », « souple », ou « non disponible » pour des symboles de liaison montante dans un créneau.

6. Procédé de communication radio selon la revendication 4, dans lequel
les informations de configuration pour la DU incluent un troisième paramètre pour configurer collectivement le type de ressource « dur », « souple », ou « non disponible » pour des symboles flexibles dans un créneau.
